(19) Europäisches Patentamt
European Patent Office
Office européen des brevets

(11) Veröffentlichungsnummer: **0 044 937**
**B1**

(12) **EUROPÄISCHE PATENTSCHRIFT**

(45) Veröffentlichungstag der Patentschrift: **30.11.83**

(51) Int. Cl.$^3$: **C 09 B 45/16** // D06P1/10, D06P3/04

(21) Anmeldenummer: **81104641.6**

(22) Anmeldetag: **16.06.81**

(54) **1:2-Chrom-Mischkomplexfarbstoffe, Verfahren zu ihrer Herstellung und ihre Verwendung.**

(30) Priorität: **25.06.80 DE 3023664**

(43) Veröffentlichungstag der Anmeldung: **03.02.82 Patentblatt 82/5**

(45) Bekanntmachung des Hinweises auf die Patenterteilung: **30.11.83 Patentblatt 83/48**

(84) Benannte Vertragsstaaten: **CH DE FR GB IT LI**

(56) Entgegenhaltungen:
**FR - A - 1 101 047**
**FR - A - 1 101 955**
**FR - A - 1 102 028**

(73) Patentinhaber: **HOECHST AKTIENGESELLSCHAFT, Postfach 80 03 20, D-6230 Frankfurt am Main 80 (DE)**

(72) Erfinder: **Fuchs, Hermann, Dr., Altenhainer Strasse 2, D-6240 Königstein/Taunus (DE)**
Erfinder: **Filzinger, Klaus, Hermann-Friesen-Strasse 15, D-5238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 044 937 B1

BUNDESDRUCKEREI BERLIN

# 1 : 2-Chrom-Mischkomplexfarbstoffe, Verfahren zu ihrer Herstellung und ihre Verwendung

Die vorliegende Erfindung liegt auf dem technischen Gebiet der Chromkomplex-Azofarbstoffe und ihrer Anwendung zum Färben von natürlichen und synthetischen Polyamidfasermaterialien.

Bei der Mischmetallisierung von Gemischen aus zwei metallfreien, zur Metallkomplexbildung befähigten Azoverbindungen entstehen in der Regel zwei symmetrische Metallkomplexverbindungen und eine unsymmetrische Metallkomplexverbindung, in welcher die beiden metallfreien Ausgangsazoverbindungen an das Metall komplex gebunden sind. Solche Metallmischkomplexfarbstoffe sind zahlreich in der Literatur bekannt. So sind in der deutschen Patentschrift 955 081 Chrommischkomplexfarbstoffe beschrieben, die mit den Chrommischkomplexfarbstoffen sehr spezifischer Konstitution der nachfolgend beschriebenen Erfindung im Aufbau ähnlich sind. Aus ihr geht jedoch nicht die vorteilhafte Kombination gemäß der vorliegenden Erfindung mit der Auswahl spezifischer metallfreier Azoverbindungen als Komponenten in den erfindungsgemäßen Chrommischkomplexfarbstoffen hervor.

Die französische Patentschrift Nr. 1 101 955 beschreibt asymmetrische 1 : 2-Chromkomplexfarbstoffe, die aus einer Monoazoverbindung und einer 1 : 1-Chromkomplexverbindung einer Azoverbindung anderer Konstitution gebildet werden, wobei eine dieser Komponenten eine Sulfonsäuregruppe trägt. Nach den Angaben dieser französischen Patentschrift können diese asymmetrischen 1 : 2-Chromkomplexfarbstoffe im übrigen von verschiedenster Konstitution sein und sich zum Färben von beispielsweise Seide und Wolle eignen.

Weiterhin sind aus der französischen Patentschrift Nr. 1 102 028 ähnliche 1 : 2-Chromkomplexfarbstoffe bekannt, die in ein dort beschriebenes und beanspruchtes Färbeverfahren zum Färben oder Bedrucken von stickstoffhaltigen Fasermaterialien eingesetzt werden.

Weiterhin ist aus der französischen Patentschrift Nr. 1 101 047 bekannt, 1 : 2-Chromkomplexfarbstoffe aus zwei unterschiedlichen Azoverbindungen unter Komplexbindung mit einem Chromsalz herzustellen, wobei man in der Regel von solchen Ausgangsverbindungen ausgeht, die für die einzelnen als Ausgangsverbindungen dienenden Azoverbindungen auch in den vorhergehend erwähnten französischen Patentschriften bereits eingesetzt wurden. Bei dieser Verfahrensweise der französischen Patentschrift 1 101 047 können Mischungen von symmetrischen und asymmetrischen 1 : 2-Chromkomplexfarbstoffen erhalten werden.

Die aus den oben erwähnten französischen Patentschriften bekannten 1 : 2-Chromkomplexfarbstoffe recht unterschiedlicher Struktur zeigen nicht in allen Fällen ein für den heutigen Standard erforderliches Färbeverhalten. Insbesondere ist in der Regel ihr Egalfärbevermögen auf Wolle und deren Ergiebigkeit nicht vollauf befriedigend.

Mit der vorliegenden Erfindung wurde nunmehr eine Auswahl von neuen vorteilhaften 1 : 2-Chrom-Mischkomplexazofarbstoffen aus metallfreien Azoverbindungen der nachstehend definierten allgemeinen Formeln (1) und (2) gefunden, die eine hohe Ergiebigkeit, insbesondere in der Färbung von Wolle, und somit eine hohe Wirtschaftlichkeit aufweisen und insbesondere Wolle, auch im Gemisch mit Polyesterfasern, mit hoher, äußerst befriedigender Egalität zu färben vermögen.

Die erfindungsgemäße Auswahl betrifft neue 1 : 2-Chrom-Mischkomplexazofarbstoffe aus metallfreien Azoverbindungen der allgemeinen Formeln (1) und (2)

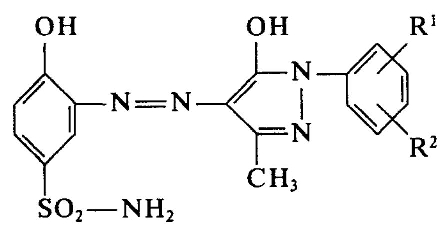

(1)

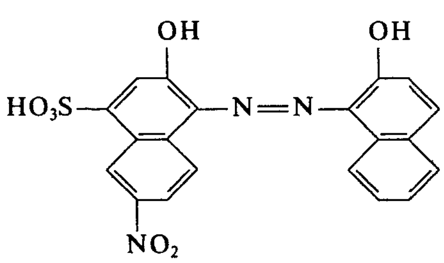

(2)

worin $R^1$ und $R^2$ gleich oder verschieden voneinander sind und jedes für ein Wasserstoffatom, die Methyl- oder Äthylgruppe oder für ein Chloratom steht.

Das molare Verhältnis der einzelnen 1 : 2-Chromkomplexverbindungen aus der Verbindung (1), aus den Verbindungen (1) und (2) sowie aus der Verbindung (2) liegt bevorzugt zwischen 10 : 80 : 10 bis 22,5 : 55 : 22,5 Molprozent.

Die erfindungsgemäßen 1 : 2-Chrom-Mischkomplexazofarbstoffe, bestehend aus einem Gemisch dieser drei 1 : 2-Chromkomplexazoverbindungen, werden vorteilhaft durch Chromierung eines Gemisches der Verbindungen der Formeln (1) und (2) erhalten. Die vorliegende Erfindung betrifft deshalb auch ein Verfahren zur Herstellung der oben definierten, erfindungsgemäßen 1 : 2-Chrom-Mischkomplexazofarbstoffe, das dadurch gekennzeichnet ist, daß man ein Gemisch aus den Verbindungen der Formeln (1) und (2) im molaren Verhältnis von 0,85 : 1,0 bis 1,2 : 1,0, vorzugsweise von 0,9 : 1,0 bis 1,1 : 1,0, bei einer Temperatur zwischen 95 und 145° C, bevorzugt zwischen 100 und 110° C, und bei einem pH-Wert zwischen 4,0 und 8,0, vorzugsweise zwischen 5 und 6,5, mit einer chromabgebenden Verbindung umsetzt.

Die erfindungsgemäßen Chrommischkomplexfarbstoffe liegen bevorzugt in Form ihrer Natrium-, Kalium- oder Ammoniumsalze vor.

Die Ausgangsverbindungen der Formeln (1) und (2) werden in bekannter Weise durch Diazotierung und Kupplung ihrer Diazo- und Kupplungskomponenten erhalten. Sie können nach ihrer Synthese direkt ohne Zwischenisolierung zur Herstellung der erfindungsgemäßen Chrommischkomplexfarbstoffe eingesetzt werden, so daß die neuen Mischkomplexfarbstoffe in bevorzugter Weise durch Chromierung gemäß den oben angegebenen Verfahrensbedingungen der nach der Synthese im entsprechenden Verhältnis miteinander vermischten Syntheselösungen oder -suspensionen der Verbindungen der Formeln (1) und (2), d. h. ohne Zwischenabscheidung und Zwischenisolierung der Verbindungen (1) und (2) aus dem Kupplungsansatz, erhalten werden.

Die Chromierung erfolgt bevorzugt in wäßrigem Medium und kann sowohl in einer offenen Apparatur als auch in einer geschlossenen Apparatur unter Druck vorgenommen werden.

Als chromabgebende Mittel kommen Chromsalze von anorganischen oder organischen Säuren in Betracht, wie beispielsweise Chrom(III)-carbonat, Kalium-chromsulfat, Chrom(III)-acetat und Chrom(III)-chlorid.

Die Chromierung kann in Abwesenheit von säurebindenden Mitteln, wie Salzen, Oxiden oder Hydroxiden von Alkalimetallen oder alkalisch wirkenden Salzen dieser Alkalimetalle, wie Natrium- oder Kaliumacetat, Natrium- oder Kaliumcarbonat oder -hydrogencarbonat oder Natrium- oder Kaliumhydroxid, erfolgen.

Die so hergestellten erfindungsgemäßen Chrommischkomplexfarbstoffe lassen sich aus ihren Syntheselösungen durch Aussalzen mit Natrium- oder Kaliumchlorid oder durch Sprühtrocknung isolieren.

Die neuen Chrommischkomplexfarbstoffe können in erfindungsgemäßer Weise zum Färben (einschließlich Bedrucken) von natürlichen und synthetischen Polyamidfasern verwendet werden, wie beispielsweise von Wolle, Seide und von synthetischen Polyamiden aus ε-Caprolactam, aus Hexamethylendiamin und Adipinsäure oder aus ω-Aminoundecylsäure. Besonders vorteilhaft lassen sie sich zum Färben der genannten Fasern in Mischung mit anderen hydrophoben Faserarten, wie beispielsweise von Wolle in Mischungen aus Wolle und Polyesterfasern, mit vorzüglicher Reservierung des hydrophoben Faseranteils verwenden. Die Erfindung betrifft somit auch ein Verfahren zum Färben (einschließlich Bedrucken) dieser Polyamidfasermaterialien, bei welchen man einen erfindungsgemäßen oder erfindungsgemäß hergestellten 1 : 2-Chrom-Mischkomplexfarbstoff aus wäßrigem Milieu auf das Fasermaterial aufbringt und das so behandelte Fasermaterial gleichzeitig oder nachträglich einer Wärmebehandlung aussetzt.

Die erfindungsgemäßen Chrommischkomplexfarbstoffe kommen bevorzugt in Form ihrer Alkalisalze, wie Natrium- und Kaliumsalze sowie auch Ammoniumsalze, zur Anwendung. Sie können in Mischung mit anderen 1 : 2-Chrom- oder 1 : 2-Kobaltkomplexfarbstoffen, die eine oder zwei Sulfonsäuregruppen pro Farbstoffmolekül enthalten, zum Färben eingesetzt werden, wobei die sehr gute Kombinierbarkeit mit solchen 1 : 2-Metallkomplexfarbstoffen mit einer Sulfonsäuregruppe hervorzuheben ist. Damit können auf technisch einfache Weise Mischungsfarbtöne oder nuancierte Farbtöne sehr guter Egalität und Durchfärbung auf Wolle und Polyamidfasern erhalten werden.

Das Färben erfolgt in bekannter und in der für Metallkomplexfarbstoffe üblichen Weise. Bevorzugt färbt man aus saurem bis neutralem wäßrigem Bad, vorzugsweise im pH-Bereich von 4,0 bis 6,5 und bei einer Temperatur zwischen 90 und 105° C; hierbei setzt man die üblichen Färbereihilfsmittel, wie beispielsweise Fettamin- oder Fettalkohol-Oxäthylierungsprodukte, und übliche Puffersubstanzen, wie Natriumphosphat, Natriumacetat und Natriumformiat, gegebenenfalls in Mischung mit den entsprechenden Säuren, zur Stabilisierung des Färbe-pH-Wertes zu. Beispielsweise kann durch Zusatz einer Säure, z. B. Ameisensäure oder Essigsäure oder auch einer Mineralsäure, zum Färbebad, das Alkalisalze der Ameisensäure, der Essigsäure oder anderer organischer Säuren enthält, ein pH-Wert des Färbebades eingestellt werden, der je nach eingesetzter Farbstoffkonzentration und erwünschter Farbtiefe auf der Faser die optimale Bedingung für den Färbeprozeß darstellt.

Zum lokalen Färben durch Bedrucken verwendet man wäßrige Druckpasten, die die üblichen Verdickungsmittel und Druckereihilfsmittel sowie ein Salz einer schwachen Base und einer starken Mineralsäure oder einer organischen Säure, beispielsweise Ammoniumsulfat oder Ammoniumtatrat,

enthalten. Die mit der Farbstoffpaste bedruckten Gewebe werden getrocknet und kurze Zeit mit Heißluft oder Dampf behandelt.

Mit den erfindungsgemäßen Chrommischkomplexfarbstoffen werden auf den natürlichen und synthetischen Polyamidfasern dunkelbraune Farbtöne mit sehr guten Echtheitseigenschaften erhalten. Als solche guten Gebrauchs- und Fertigungsechtheiten sind beispielsweise die Wasserechtheit (schwer), die Meerwasser-, Wasch-, Peroxydwasch-, Chlorbadewasser-, die saure und alkalische Schweißechtheit, die Lösungsmittel-, Säure-, Hypochloritbleichechtheit (leicht und schwer), die alkalische und saure Walkechtheit, die Carbonisier-, Heißwasser-, Dekaturechtheit (leicht und schwer), die Trockenhitzefixierechtheit und insbesondere die vorzügliche Lichtechtheit in der ®Xenotest und Tagesbelichtung zu nennen.

Die erfindungsgemäßen Chrommischkomplexfarbstoffe zeichnen sich weiterhin durch ein nicht vorhersehbar gutes und gleichmäßiges Aufbauvermögen und Aufziehverhalten während des Färbevorgangs aus der Färbeflotte auf die Faser aus. Sie zeigen deshalb eine hohe Egalität der Färbung und zeigen zudem aufgrund ihrer hohen Ergiebigkeit auf Wolle wie auf synthetischen Polyamidfasern hohe Farbstärken.

Die nachfolgenden Beispiele dienen zur Erläuterung der Erfindung. Die Teile sind Gewichtsteile, die Prozentangaben beziehen sich auf Gewichtsprozente, sofern nicht anders vermerkt.

## Beispiel 1

Es wird die Herstellung des erfindungsgemäßen 1 : 2-Chrom-Mischkomplexfarbstoffes aus den Monoazoverbindungen der Formeln (1a) und (2)

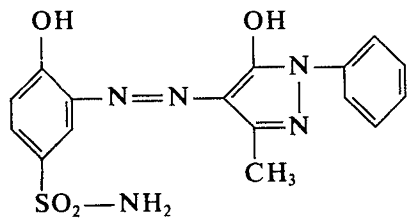

(1a)

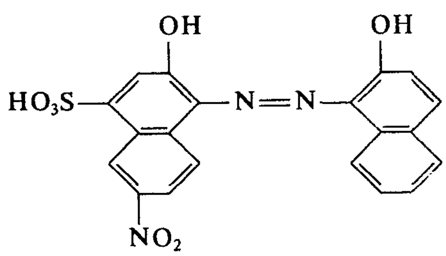

(2)

beschrieben. Hierzu werden zuerst die beiden Monoazoverbindungen getrennt hergestellt und sodann zusammen mittels eines Chromsalzes chromiert.

Zur Herstellung der Azoverbindung (1a) werden 18,8 Teile 2-Aminophenol-4-sulfonsäureamid in einer Mischung von 50 Teilen Wasser, 50 Teilen Eis und 25 Teilen 31%iger Salzsäure gelöst und sodann mittels 17,3 Teilen einer wäßrigen 40%igen Natriumnitritlösung in üblicher Verfahrensweise diazotiert. Es wird eine Stunde nachgerührt und der Nitritüberschuß mit wenig Amidosulfonsäure zersetzt. Die Diazoniumsalzlösung wird sodann durch Einstreuen von 9,8 Teilen wasserfreiem Natriumcarbonat auf einen pH-Wert von 5,0 gestellt und sodann bei 25° C in eine Lösung von 17,4 Teilen 1-Phenyl-3-methyl-pyrazol-5-on in 100 Teilen Wasser und 27,2 Teilen einer wäßrigen 33%igen Natronlauge einfließen lassen. Nach etwa 3 Stunden ist die Kupplungsreaktion beendet.

Zur Herstellung der Monoazoverbindung (2) werden 29,5 Teile 6-Nitro-1-diazo-2-naphthol-4-sulfonsäure in 40 Teilen Wasser angerührt und mit 9 Teilen einer wäßrigen 33%igen Natronlauge auf einen pH-Wert von 4 bis 5 gestellt. 12 Teile wasserfreies Natriumcarbonat und 7,5 Teile Calciumhydroxid und danach eine Lösung von 17,5 Teilen 2-Naphthol in 40 Teilen Wasser und 16,3 Teilen einer 33%igen Natronlauge werden sodann unter Rühren zugegeben. Die Kupplung ist nach etwa 8 Stunden bei etwa 20° C beendet.

Diese beiden Kupplungsansätze werden nach Herstellung der Azoverbindungen vereinigt, und die Mischung wird mit 26,5 Teilen Eisessig auf einen pH-Wert von 5,5 gestellt. 28,0 Teile Chrom(III)-acetat werden zugegeben, und dieser Reaktionsansatz wird 4 Stunden lang unter Rückfluß erhitzt. Nach beendeter Chromierung wird die Farbstofflösung filtriert, auf Raumtemperatur abgekühlt, und der gebildete Chrommischkomplexfarbstoff wird aus der Lösung mit Natriumchlorid ausgesalzen, abfiltriert und getrocknet. Es wird ein schwarzbraunes, natriumchloridhaltiges Farbstoffpulver

erhalten, das den obengenannten Chrommischkomplexfarbstoff als Natriumsalz enthält. Dieser Farbstoff ist ausgezeichnet zum Färben von Wolle und synthetischen Polyamidfasern geeignet, auf denen er kräftige, dunkelbraune Färbungen von guter Egalität und Echtheiten liefert.

Beispiel 2

Man verfährt in der im Beispiel 1 beschriebenen Verfahrensweise zur Herstellung eines 1 : 2-Chrom-Mischkomplexfarbstoffes ersetzt jedoch die Kupplungskomponente für die Azoverbindung (1a) durch 20,9 Teile 1-(2′-Chlorphenyl)-3-methyl-pyrazol-5-on als Kupplungskomponente.

Nach Aussalzen und Isolierung erhält man den 1 : 2-Chrom-Mischkomplexfarbstoff, der die Azoverbindungen der Formeln (1b) und (2)

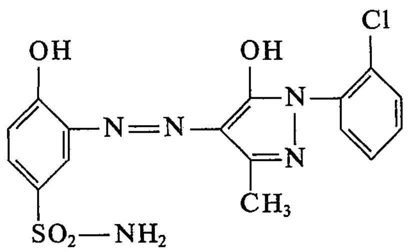

(1b)

als Komponenten enthält. Dieser Farbstoff eignet sich sehr gut zum Färben von Wolle und synthetischen Polyamidfasern, wie von Polycaprolactamfasern, und liefert auf diesem Fasermaterial dunkelbraune Färbungen mit guten Naßechtheiten und sehr guter Lichtechtheit.

Beispiel 3

Man verfährt gemäß der im Beispiel 1 beschriebenen Verfahrensweise, ersetzt jedoch bei der Herstellung der Monoazoverbindung (1a) die dort verwendete Kupplungskomponente durch 24,3 Teile 1-(2′,5′-Dichlorphenyl)-3-methyl-pyrazol-5-on. Nach Beendigung der Chromierung des Kupplungsgemisches und Aussalzen und Isolierung erhält man den 1 : 2-Chrom-Mischkomplexfarbstoff mit den Verbindungen der Formeln (1c) und (2)

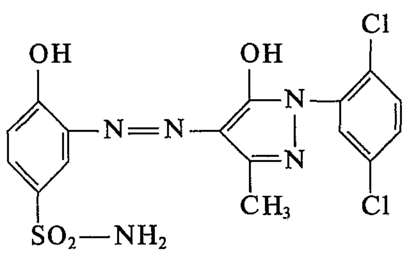

(1c)

als Farbstoffkomponenten. Dieser Chrommischkomplexfarbstoff färbt Wolle und synthetische Polyamidfasern in kräftigen braunen Tönen mit guten Echtheiten, insbesondere einer vorzüglichen Lichtechtheit.

Beispiele 4 bis 9

Man chromiert in erfindungsgemäßer Weise, beispielsweise gemäß den Angaben des Beispiels 1, zur Herstellung eines erfindungsgemäßen 1 : 2-Chrom-Mischkomplexfarbstoffes eine Mischung aus etwa äquimolaren Mengen einer Azoverbindung der Formel (2) und einer Azoverbindung entsprechend der allgemeinen Formel (1), die in den nachfolgenden Tabellenbeispielen durch die Formelreste $R^1$ und $R^2$ definiert ist. Diese erfindungsgemäßen 1 : 2-Chrom-Mischkomplexfarbstoffe eignen sich ebenso sehr gut zum Färben von synthetischen und natürlichen Polyamidfasern, auf denen sie bei Anwendung der in der Technik üblichen und für Metallkomplexfarbstoffe gängigen Färbeverfahren dunkelbraune Färbungen mit hoher Egalität und sehr guten Echtheitseigenschaften liefern.

| Beispiel | 1 : 2-Chrom-Mischkomplexfarbstoff aus Azoverbindung gemäß Formel (1) R¹ | R² | und Azoverbindung der Formel (2) | Farbton auf Wolle |
|---|---|---|---|---|
| 4 | H | 2'-Methyl | (2) | dunkelbraun |
| 5 | H | 3'-Äthyl | (2) | dunkelbraun |
| 6 | H | 3'-Chlor | (2) | dunkelbraun |
| 7 | H | 4'-Chlor | (2) | dunkelbraun |
| 8 | 2'-Chlor | 4'-Chlor | (2) | dunkelbraun |
| 9 | 2'-Chlor | 4'-Äthyl | (2) | dunkelbraun |

Anwendungsbeispiel 1

100 Teile Wollgewebe werden in ein 40°C warmes wäßriges Färbebad eingebracht, das in 3000 Teilen Wasser 1,0 Teile des Chrommischkomplexfarbstoffes von Beispiel 1, 0,15 Teile eines Anlagerungsproduktes von 12 Mol Äthylenoxid an 1 Mol Stearylamin, 2 Teile Ammoniumacetat und 2 Teile einer 60%igen wäßrigen Essigsäure enthält. Dieses Färbebad wird innerhalb von 30 Minuten auf Kochtemperatur erwärmt, und die Färbung wird 60 Minuten bei 100°C weitergeführt. Anschließend wird das gefärbte Wollgewebe herausgenommen und in üblicher Weise gespült und fertiggestellt. Es wird eine dunkelbraune Färbung erhalten, die eine gute Egalität aufweist und eine vorzügliche Lichtechtheit und gute bis sehr gute Naßechtheiten besitzt.

Ersetzt man das Wollgewebe durch 100 Teile eines Gewebes aus Polycaprolactam und verfährt ansonsten in der angegebenen Färbeweise, so erhält man ebenfalls eine egale kräftige braune Färbung mit vorzüglicher Lichtechtheit und sehr guten Gebrauchs- und Fertigungsechtheiten.

Anwendungsbeispiel 2

100 Teile eines Gewebes aus einer Polycaprolactamfaser werden in ein 40°C warmes Färbeband eingebracht, das in 3000 Teilen Wasser 1,5 Teile des Chrommischkomplexfarbstoffes von Beispiel 2, 0,15 Teile eines Anlagerungsproduktes von 12 Mol Äthylenoxid an 1 Mol Stearylamin, 2,0 Teile Ammoniumacetat und 2,0 Teile einer 60%igen wäßrigen Essigsäure enthält. Innerhalb von 15 Minuten erhöht man sodann die Temperatur des Färbebades auf 98 bis 100°C und setzt die Färbung 60 Minuten lang bei 100°C fort. Die so erhaltene Färbung wird dann aus dem Bad herausgenommen, in üblicher Weise gespült und fertiggestellt.

Man erhält eine dunkelbraune Färbung mit hoher Egalität, die eine sehr gute Lichtechtheit und gute bis sehr gute Naßechtheitseigenschaften aufweist.

Anwendungsbeispiel 3

Ein Teppichgarn aus Polyamid-6,6 wird mit einer Flottenaufnahme von 100% des Warengewichtes mit einer Farbstofflösung geklotzt, die in 1000 Teilen 10 Teile des Chrommischkomplexfarbstoffs von Beispiel 3, 5 Teile eines Johannisbrotkernmehlpräparates als Verdickungsmittel, ein Mol Isotridecylalkohol und 10 Teile einer 60%igen wäßrigen Essigsäure enthält. Das geklotzte Garn wird anschließend 6 Minuten mit 100 bis 102°C heißem Wasserdampf gedämpft, danach mit kaltem Wasser gespült und getrocknet. Es wird eine dunkelbraune Färbung erhalten, die eine vorzügliche Tageslichtechtheit und sehr gute Gebrauchsechtheiten besitzt.

Beispiel 10

Zur Herstellung der Azoverbindung (1a) werden 16,92 Teile 2-Aminophenol-4-sulfonsäureamid in einer Mischung von 50 Teilen Wasser, 50 Teilen Eis und 25 Teilen 31%iger Salzsäure gelöst und sodann

mittels 15,6 Teilen einer wäßrigen 40%igen Natriumnitritlösung in üblicher Verfahrensweise diazotiert. Es wird eine Stunde nachgerührt und der Nitritüberschuß mit wenig Amidosulfonsäure zersetzt. Die Diazoniumsalzlösung wird sodann durch Einstreuen von 8,8 Teilen wasserfreiem Natriumcarbonat auf einen pH-Wert von 5,0 gestellt und bei 25° C in eine Lösung von 15,7 Teilen 1-Phenyl-3-methyl-pyrazol-5-on in 100 Teilen Wasser und 24,5 Teilen einer wäßrigen 33%igen Natronlauge einfließen lassen. Nach etwa 3 Stunden ist die Kupplungsreaktion beendet.

Zur Herstellung der Monoazoverbindung (2) werden 29,5 Teile 6-Nitro-1-diazo-2-naphthol-4-sulfonsäure in 40 Teilen Wasser angerührt und mit 9 Teilen einer wäßrigen 33%igen Natronlauge auf einen pH-Wert von 4 bis 5 gestellt. 12 Teile wasserfreies Natriumcarbonat und 7,5 Teile Calciumhydroxid und danach eine Lösung von 17,5 Teilen 2-Naphthol in 40 Teilen Wasser und 16,3 Teilen einer 33%igen Natronlauge werden anschließend unter Rühren zugegeben. Die Kupplung ist nach etwa 8 Stunden bei etwa 20° C beendet.

Diese beiden Kupplungsansätze werden nach Herstellung der Azoverbindungen vereinigt, und die Mischung wird mit 25,0 Teilen Eisessig auf einen pH-Wert von 5,5 gestellt. 28,0 Teile Chrom(III)-acetat werden zugegeben, und dieser Reaktionsansatz wird 2 Stunden lang unter Druck auf 135° C erhitzt. Nach beendeter Chromierung wird die Farbstofflösung filtriert und auf Raumtemperatur abgekühlt; der gebildete Chrommischkomplexfarbstoff wird aus der Lösung mit Natriumchlorid ausgesalzen, abfiltriert und getrocknet. Es wird ein schwarzbraunes, natriumchloridhaltiges Farbstoffpulver erhalten, das den erfindungsgemäßen Chrommischkomplexfarbstoff als Natriumsalz enthält. Dieser Farbstoff ist ausgezeichnet zum Färben von Wolle und synthetischen Polyamidfasern geeignet, auf denen er kräftige, dunkelbraune Färbungen von guter Egalität und Echtheiten liefert.

Beispiel 11

Man verfährt in der im Beispiel 10 beschriebenen Verfahrensweise zur Herstellung eines 1 : 2-Chrommischkomplexfarbstoffes, ersetzt jedoch die Kupplungskomponente für die Azoverbindung (1a) durch 18,81 Teile 1-(2'-Chlorphenyl)-3-methyl-pyrazol-5-on als Kupplungskomponente.

Nach Aussalzen und Isolierung erhält man den 1 : 2-Chrommischkomplexfarbstoff, der die Azoverbindung der Formeln (1b) und (2) als Komponenten enthält. Dieser Farbstoff eignet sich sehr gut zum Färben von Wolle und synthetischen Polyamidfasern, wie von Polycaprolactamfasern, und liefert auf diesem Fasermaterial dunkelbraune Färbungen mit guten Naßechtheiten und sehr guter Lichtechtheit.

Beispiel 12

Zur Herstellung der Azoverbindung (1a) werden 20,7 Teile 2-Aminophenol-4-sulfonsäureamid in einer Mischung von 50 Teilen Wasser, 50 Teilen Eis und 25 Teilen 31%iger Salzsäure gelöst und sodann mittels 19,0 Teilen einer wäßrigen 40%igen Natriumnitritlösung in üblicher Verfahrensweise diazotiert. Es wird eine Stunde nachgerührt und der Nitritüberschuß mit wenig Amidosulfonsäure zersetzt. Die Diazoniumsalzlösung wird sodann durch Einstreuen von 10,8 Teilen wasserfreiem Natriumcarbonat auf einen pH-Wert von 5,0 gestellt und bei 25° C in eine Lösung von 19,14 Teilen 1-Phenyl-3-methyl-pyrazol-5-on in 100 Teilen Wasser und 29,9 Teilen einer wäßrigen 33%igen Natronlauge einfließen lassen. Nach etwa 3 Stunden ist die Kupplungsreaktion beendet.

Zur Herstellung der Monoazoverbindung (2) werden 29,5 Teile 6-Nitro-1-diazo-2-naphthol-4-sulfonsäure in 40 Teilen Wasser angerührt und mit 9 Teilen einer wäßrigen 33%igen Natronlauge auf einen pH-Wert von 4 bis 5 gestellt. 12 Teile wasserfreies Natriumcarbonat und 7,5 Teile Calciumhydroxid und danach eine Lösung von 17,5 Teilen 2-Naphthol in 40 Teilen Wasser und 16,3 Teilen einer 33%igen Natronlauge werden unter Rühren zugegeben. Die Kupplung ist etwa 8 Stunden bei etwa 20° C beendet.

Diese beiden Kupplungsansätze werden nach Herstellung der Azoverbindungen vereinigt, und die Mischung wird mit 24,5 Teilen Eisessig auf einen pH-Wert von 6,5 gestellt. 28,0 Teile Chrom(III)-acetat werden zugegeben, und dieser Reaktionsansatz wird 4 Stunden lang unter Rückfluß erhitzt. Nach beendeter Chromierung wird die Farbstofflösung filtriert und auf Raumtemperatur abgekühlt, und der gebildete Chrommischkomplexfarbstoff wird aus der Lösung mit Natriumchlorid ausgesalzen, abfiltriert und getrocknet. Es wird ein schwarzbraunes, natriumchloridhaltiges Farbstoffpulver erhalten, das den erfindungsgemäßen Chrommischkomplexfarbstoff als Natriumsalz enthält. Dieser Farbstoff ist ausgezeichnet zum Färben von Wolle und synthetischen Polyamidfasern geeignet, auf denen er kräftige, dunkelbraune Färbungen von guter Egalität und Echtheiten liefert.

Beispiel 13

Man verfährt in der im Beispiel 1 beschriebenen Verfahrensweise zur Herstellung eines 1 : 2-Chrommischkomplexfarbstoffes, ersetzt jedoch die Kupplungskomponente für die Azoverbindung (1a) durch 23,0 Teile 1-(2'-Chlorphenyl)-3-methylpyrazol-5-on als Kupplungskomponente.

Nach Aussalzen und Isolierung erhält man den 1 : 2-Chrommischkomplexfarbstoff, der die Azoverbindungen der Formeln (1b) und (2) als Komponenten enthält. Dieser Farbstoff eignet sich sehr gut zum Färben von Wolle und synthetischen Polyamidfasern, wie von Polycaprolactamfasern, und liefert auf diesem Fasermaterial dunkelbraune Färbungen mit guten Naßechtheiten und sehr guter Lichtechtheit.

**Patentansprüche**

1. 1 : 2-Chrom-Mischkomplexfarbstoffe von Monoazoverbindungen der nachstehend definierten allgemeinen Formeln (1) und (2), bestehend aus einem symmetrischen 1 : 2-Chromkomplexfarbstoff einer Monoazoverbindung der allgemeinen Formel (1), einem symmetrischen 1 : 2-Chromkomplexfarbstoff einer Monoazoverbindung der allgemeinen Formel (2) und einem asymmetrischen 1 : 2-Chromkomplexfarbstoff mit einer Monoazoverbindung der allgemeinen Formel (1) und einer Monoazoverbindung der allgemeinen Formel (2)

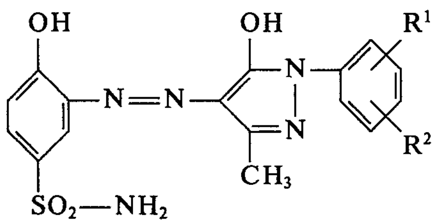

(1)

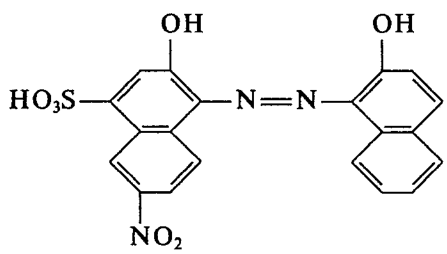

(2)

worin $R^1$ und $R^2$ gleich oder verschieden voneinander sind und jedes für ein Wasserstoffatom, die Methyl- oder Äthylgruppe oder für ein Chloratom steht.

2. 1 : 2-Chrom-Mischkomplexfarbstoffe nach Anspruch 1, dadurch gekennzeichnet, daß das molare Verhältnis der einzelnen 1 : 2-Chromkomplexfarbstoffe aus der Verbindung (1), aus den Verbindungen (1) und (2) sowie aus der Verbindung (2) zwischen 10 : 80 : 10 bis 22,5 : 55 : 22,5 Molprozent liegt.

3. Mischkomplexe nach Anspruch 1 aus einer Verbindung der Formel

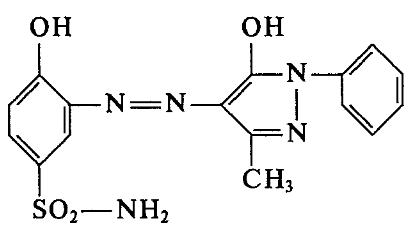

und einer Verbindung der Formel

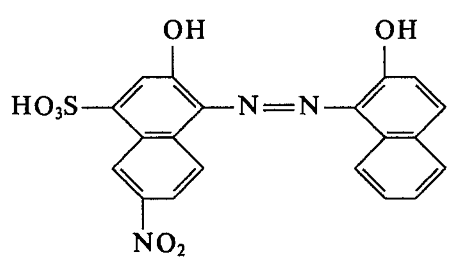

4. Mischkomplexe nach Anspruch 1 aus einer Verbindung der Formel

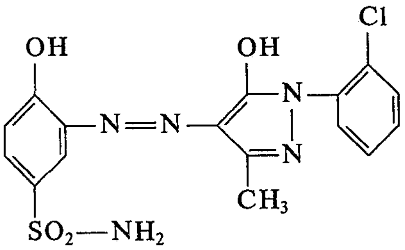

und einer Verbindung der Formel

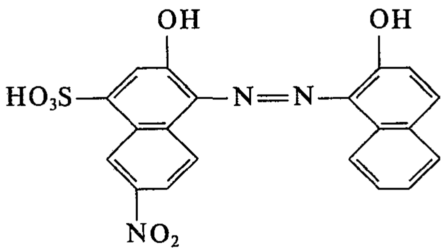

5. Mischkomplexe nach Anspruch 1 aus einer Verbindung der Formel

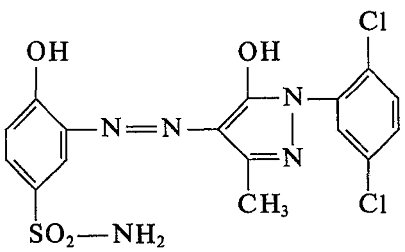

und einer Verbindung der Formel

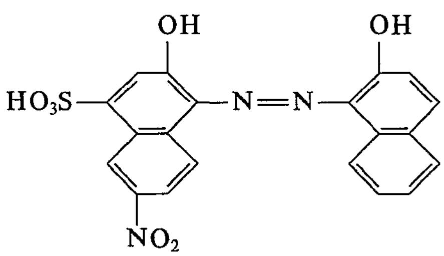

6. Verfahren zur Herstellung der 1 : 2-Chrom-Mischkomplexfarbstoffe nach Anspruch 1, dadurch gekennzeichnet, daß man ein Gemisch einer Verbindung der allgemeinen Formel (1) und einer Verbindung der allgemeinen Formel (2) im molaren Verhältnis von 0,85 : 1,0 bis 1,2 : 1,0 bei einer Temperatur zwischen 95 und 145°C und bei einem pH-Wert zwischen 4,0 und 8,0 mit einer chromabgebenden Verbindung umsetzt.

7. Verwendung der Mischkomplexfarbstoffe von Anspruch 1 oder 2 zum Färben von natürlichen und synthetischen Polyamidfasern.

8. Verfahren zum Färben von natürlichen und synthetischen Polyamidfasern, bei welchem man einen Farbstoff aus wäßrigem Milieu auf dieses Fasermaterial aufbringt und hierbei oder nachträglich das Fasermaterial einer Wärmebehandlung aussetzt, dadurch gekennzeichnet, daß man als Farbstoff einen 1 : 2-Chrom-Mischkomplexfarbstoff nach Anspruch 1 oder 2 verwendet.

**Claims**

1. 1 : 2-chromium-mixed-complex dyestuffs of monoazo compounds of the subsequently defined general formulae (1) and (2), consisting of a symmetrical 1 : 2-chromium-complex dyestuff of a monoazo compound of the general formula (1), of a symmetrical 1 : 2-chromium-complex dyestuff of a monoazo compound of the general formula (2) and of an asymmetrical 1 : 2-chromium-complex

dyestuff with a monoazo compound of the general formula (1) and a monoazo compound of the general formula (2)

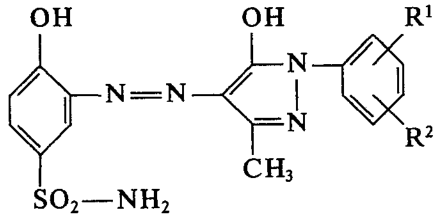
(1)

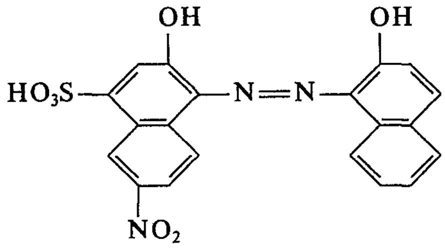
(2)

in which $R^1$ and $R^2$ have the same or a different meaning from one another and each is a hydrogen atom, the methyl or ethyl group or a chlorine atom.

2. 1 : 2-chromium-mixed-complex dyestuffs according to claim 1, characterized in that the molar ratio of the individual 1 : 2-chromium-complex dyestuffs from the compound (1), from the compounds (1) and (2) as well as from the compound (2) is between 10 : 80 : 10 to 22.5 : 55 : 22.5 molpercent.

3. Mixed complexes according to claim 1 from a compound of the formula

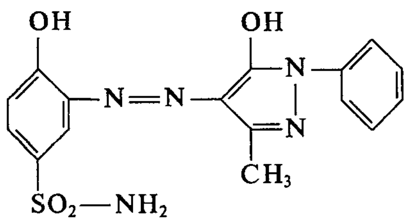

and of a compound of the formula

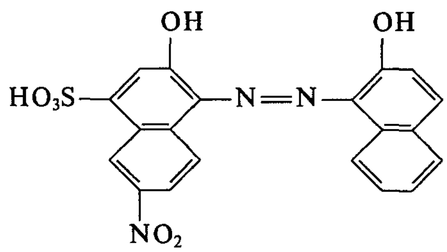

4. Mixed-complexes according to claim 1 from a compound of the formula

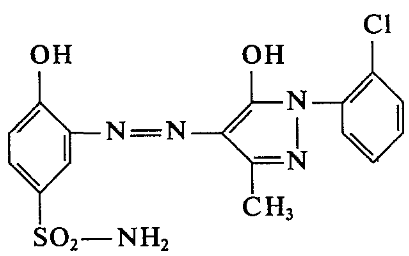

and a compound of the formula

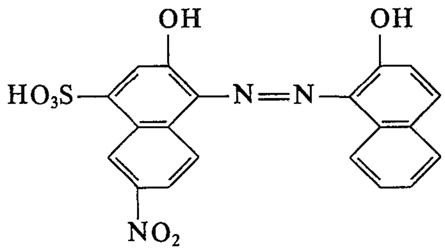

5. Mixed-complexes according to claim 1 from a compound of the formula

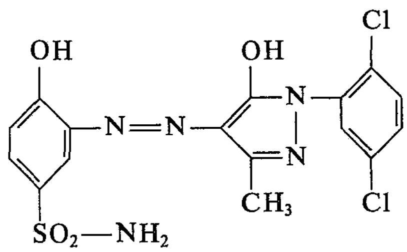

and a compound of the formula

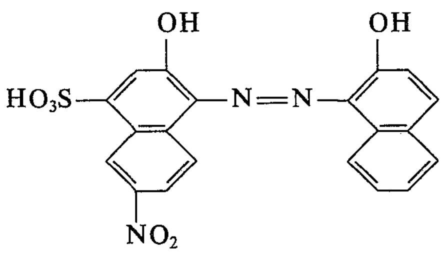

6. Process for the preparation of the 1 : 2-chromium-miced-complex dyestuffs of claim 1, characterized by that a mixture of a compound of the general formula (1) and of a compound of the general formula (2) in the molar ratio of from 0.85 : 1.0 to 1.2 : 1.0 is reacted with a chromium-donating compound at a temperature between 95 and 145° C and at a pH-value between 4.0 and 8.0.

7. Use of the mixed-complex dyestuffs of claim 1 or 2 for coloring natural and synthetic polyamide fibres.

8. Process for coloring natural and synthetic polyamide fibres, in which a dyestuff is applied from an aqueous medium onto this fibre material and the fibre material is subjected at this procedure or following to this procedure to a heat treatment, characterized in that a 1 : 2-chromium-mixed-complex dyestuff of claim 1 or 2 ist employed as the dyestuff.

**Revendications**

1. Colorants complexes mixtes de chrome 1 : 2 de composés monoazoïques des formules générales (1) et (2) ci-après définies, formés d'un colorant complexe de chrome 1 : 2 symétrique d'un composé monoazoïque de formule (1), d'un colorant complexe de chrome 1 : 2 symétrique d'un composé monoazoïque de formule (2) et d'un colorant complexe de chrome 1 : 2 asymétrique d'un composé monoazoïque de formule (1) et d'un composé monoazoïque de formule (2):

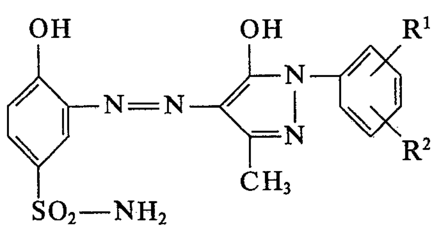

(1)

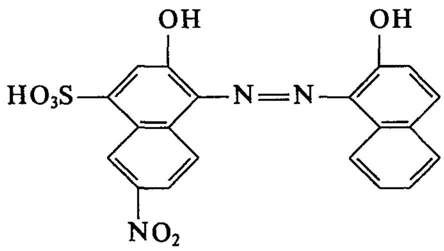

(2)

$R^1$ et $R^2$, qui peuvent être identiques ou différents l'un de l'autre, représentant chacun un atome d'hydrogène, le groupe méthyle ou éthyle ou un atome de chlore.

2. Colorants complexes mixtes de chrome 1 : 2 selon la revendication 1, caractérisés en ce que les proportions molaires des colorants complexes mixtes de chrome 1 : 2 individuels du composé (1), des composés (1) et (2) et due composé (2), sont comprises entre 10 : 80 : 10 et 22,5 : 55 : 22.5, respectivement, ein pourcentages molaires.

3. Complexes mixtes selon la revendication 1, du composé de formule:

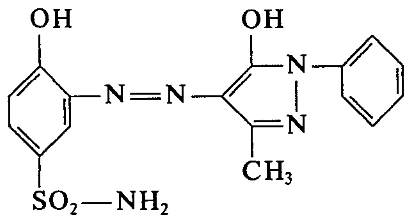

et du composé de formule:

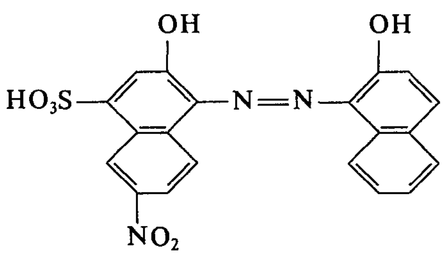

4. Complexes mixtes seson la revendication 1, du composé de formule:

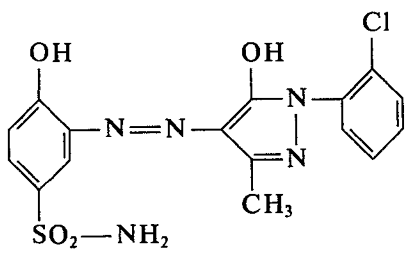

et du composé de formule:

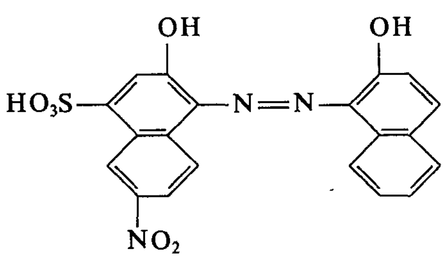

5. Complexes mixtes selon la revendication 1, du composé de formule:

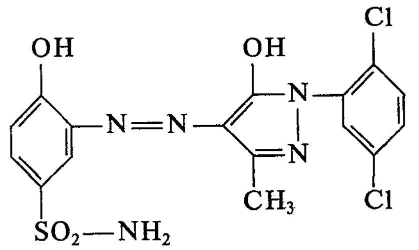

et du composé de formule:

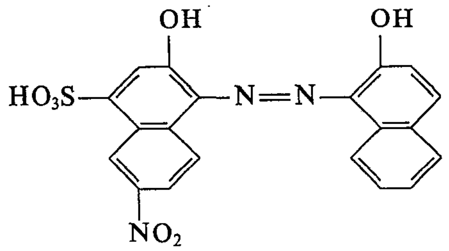

6. Procédé de préparation des colorants complexes mixtes de chrome 1 : 2 selon la revendication 1, procédé caractérisé en ce que l'on fait réagir avec un composé donnant du chrome un mélange d'un composé de formule (1) et d'un composé de formule (2) dans un rapport molaire compris entre 0,85 et 1,2, à une température de 95 à 140° C et à un pH compris entre 4 et 8.

7. L'utilisation des colorants complexes mixtes selon la revendication 1 ou 2 pour la teinture de fibres de polyamides naturels ou synthétiques.

8. Procédé de teinture de fibres de polyamides naturels ou synthétiques, dans lequel on applique un colorant sur la matière fibreuse, en milieu aqueux, et simultanément, ou par la suite, on soumet la matière fibreuse à un traitement à la chaleur, procédé caractérisé en ce que l'on utilise comme colorant un colorant complexe mixte de chrome 1 : 2 selon la revendication 1 ou 2.